# EUROPEAN PATENT APPLICATION

(11) **EP 4 686 940 A1**
(43) Date of publication of application: **04.02.2026**
(21) Application number: 24191571.9
(22) Date of filing: 29.07.2024
(51) Int. Cl.: G01N 27/414

(54) **SENSOR DEVICE AND CORRESPONDING METHODS**

(71) Applicant: Fraunhofer-Gesellschaft zur Förderung der angewandten Forschung e.V., 80686 München (DE)
(72) Inventor: EISELE, Ignaz, 80686 München (DE); BOUDADEN, Jamila, 80686 München (DE); NEUMEIER, Karl, 80686 München (DE)
(74) Representative: Pfitzner, Hannes

(57) **Abstract**

Sensor device (20, 20', 20") for determining a property of a fluid, gas or liquid, comprising: a control gate (2); a sensing layer (6); at least one insulating layer between the sensing layer (6) and the control gate (2), wherein the at least one insulating layer comprises a floating gate (4).

## Description

Embodiments of the present invention refer to a sensor device, to a method for manufacturing a sensor device and to a method for performing a measurement using the sensor device. Preferred embodiments refer to a sensor device for determining a property of a fluid, gas or liquid, especially a capacitance or charge (or capacitances and charges, respectively).

In the prior art there is some patent literature discussing sensors in a similar field of application. For example, the WO20005103667 A1 refers to a FET-based sensor for determining a gas. The DE4333875 discloses a capacitance control field effect transistor forming the basis for a semiconductor gas sensor device. The US2013/0126947 refers to another semiconductor gas sensor. A fluid sensor and method for examining a fluid is described in the US 9,716,140 B2. The WO 2019/063650 refers to a fluid sensor. Here, also capacitively controlled field effect transistors CCFETS are used. The SGFET (suspended gate field effect transistor) and FGFET (floating gate field effect transistor) are specific variants.

It is an objective of the present invention to provide a sensor concept having an improved tradeoff between detection accuracy, applicability to different measurement tasks and adaptability to different measurement conditions.

The objective is solved by the subject matter of the independent claims.

An embodiment of the present invention provides a sensor device for determining a property of a fluid, gas or liquid. The sensor device comprises a control gate, sensing layer and at least one insulating layer between the sensing layer and the control gate. Here, the at least one insulating layer comprises a floating gate.

According to embodiment, the sensor device comprises a substrate, e.g., a semiconductor substrate. For example, the control gate may be integrated into said substrate. According to further embodiments, the control gate may be made of a conducting material, like a doped semiconductor or metal.

According to an embodiment the sensor device further comprises one or more transistors, especially MOSFET transistors. According to embodiments, the transistors may be integrated or arranged within the above mentioned substrate.

Embodiments of the present invention refer to a sensor device which is formed by a kind of layer stack, e.g., arranged on a substrate comprising an insulating layer and a sensing layer. In the insulating layer a floating gate may be arranged.

Embodiments are based on the principle that underneath the insulating layer, additionally to the floating gate, a control gate may be arranged. The floating gate which is typically used for the measurement is enhanced by the control gate, wherein the control gate enables to keep the potential at the floating gate constant, e.g., by varying the potential at the control gate. Due to this, the measurement accuracy can be improved. Furthermore, the entire sensor device can be adapted to different measurement conditions and measurement applications.

According to embodiments, the sensor device comprises a first transistor, especially a MOSFET transistor, wherein the floating gate is connected to the first transistor. Alternatively, the sensor device may comprise a second transistor, especially a MOSFET transistor, wherein the floating gate is connected to the gate of the second transistor. For example, the first transistor may be a p channel transistor. According to embodiments, the second transistor may be an n channel transistor. Both transistors may be implemented using CMOS. According to another embodiment, the sensor device comprises a first and second transistor, especially MOSFET transistors. Here, the floating gate is connected to the gates of the first transistor and the second transistor.

Regarding the floating gate, it should be noted that same may be positioned inside the at least one insulating layer. For example, the at least one insulating layer may, according to embodiments, comprise a combination of different insulating layers. Here, the floating gate may be integrated as one layer. According to embodiments, the control gate sensing layer and/or floating gate may be arranged at the same lateral position of the sensor device. This means, in other words, that the control gate and the sensing layer are arranged so as to form a common lateral projection or common lateral overlap. The above mentioned transistors are arranged laterally adjacent to the control gate and sensing layer. The floating gate may be arranged, such that same covers the control gate and/or sensing layer or, preferably, such that the floating gate laterally extends over a projection of the control gate and/or sensing layer. Due to the lateral extension it can be connected to the transistors arranged at the side of the control gate. For example, the control gate may be made out of a conducting material, like a metal layer within the at least one insulating layer.

According to another embodiment, the sensor device further comprises one or more counter electrodes and arranged on the at least on insulating layer. For example, the counter electrodes may comprise a conducting material, wherein an insulating material separates the one or more counter electrodes from the sensitive layer. According to embodiments, a plurality of counter electrodes are used, wherein the counter electrodes differ with regard to its topology. Note, advantageously, the counter electrodes enable (together with the control gate) to keep a constant potential of the floating gate by varying the potential of the control gate and/or counter electrode. Note, preferably, the counter electrodes are arranged laterally adjacent to the sensing layer so that a projection of the counter electrodes and the sensing layer do not have an overlap (i.e., are adjacent to each other).

According to embodiments, the one or more counter electrodes may beneficially be configured to act as reference electrodes for the conducting liquids and/or to act as electrical shielding for insulating fluids and/or to define an electrical potential for insulating fluids.

According to embodiments, the fluids or gas or liquids are analyzed with respect to a certain property by use of the sensing layer. The property may, for example, be a charge or the fluid, gas or liquid. Therefore, the sensing device may be reactive on such charges or be configured to vary its capacitance dependent on the fluid, gas or liquid.

Regarding the sensing device, it should be noted that same may comprise a metal or semiconductor material or insulating material or biological (reactive) material or chemical reactive material. The sensing layer may be configured to detect charges being present at the surface or in the back of the sensing layer or, alternatively, may be configured to detect a physical or chemical modification on a capacitance of the sensing layer. For this it may be configured to change its capacitance dependent on a fluid, gas or liquid in the surrounding or may be reactive on charges of the fluid, gas or liquid in the surrounding.

According to further embodiments, the sensing layer may be configured to detect a combination of (change) charges and (change) capacitance. According to embodiments, the insulating layer comprises a kind of sink in which the sensing layer is arranged.

According to further embodiments, the sensor device may comprise a ring guard, especially a ring guard arranged on the at least one insulating layer and/or arranged around the sensing layer. Preferably, the ring guard may be arranged around the sensing layer on the insulating layer. The ring guard has advantageously the task to avoid potential perturbations that can lead to parasitic signals.

According to further embodiments, the sensor device may comprise a temperature sensing element, e.g., a temperature sensing element being implemented as a diode. For example, the temperature sensing element may be arranged within the substrate. According to further embodiments, the sensor device further comprises a heating element, e.g., a heating element being integrated around the sensing layer. Both elements help to control the temperature for the sensing layer either in combination or separately.

Another embodiment refers to a method for manufacturing the sensor device. The method comprises:
- providing a substrate comprising a control gate; and
- providing at least one insulating layer on the substrate, so that the at least one insulating layer comprises a floating gate; and
- providing a sensing layer on the at least one insulating layer.

Another embodiment refers to a method for determining a charge and/or a capacitance using the sensing device. The method comprises the main step of determining a change of voltage at the floating gate.

Below, embodiments of the present invention will subsequently be discussed referring to the enclosed figures, wherein
- Fig. 1: shows the schematic block diagram of a sensor device according to a basic embodiment;
- Fig. 2a: shows a schematic block diagram of a sensor device comprising a control gate and an additional MOSFET according to embodiments;
- Fig. 2b: shows a schematic block diagram of a sensor device comparable to the sensor device of Fig. 2a, but comprising optional features according to further embodiments; and
- Fig. 3: shows a schematic block diagram of a sensor device according to enhanced embodiments.

Below, embodiments of the present invention will subsequently be discussed referring to the enclosed figures, wherein identical reference signs are provided to objects having identical or similar functions so that the description thereof is mutually interchangeable and applicable.

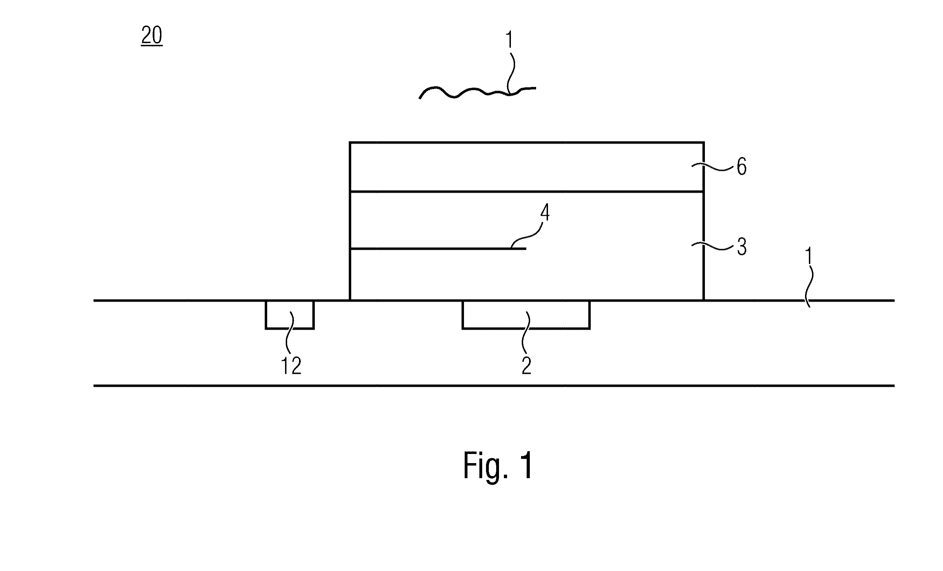

Fig. 1 shows a sensor device 20 which may be based on a silicon or any other semiconductor material. The sensor device 20 comprises at least a sensing layer 6, e.g., as a top layer, which is arranged on an insulator. The insulator is marked by the reference numeral 3. According to embodiments, the insulator may be a single insulating layer or a combination of different insulating layers. The insulating layer comprises a floating gate 4 which is, for example, made of a conducting material. Here, the floating gate 4 is positioned within the insulating layer 3.

Furthermore, the sensor device 20 comprises a control gate 2 which is made of a conducting material, e.g., doped semiconductor or metal. The control gate 2 may be arranged within or on a semiconductor substrate 1. It should be noted that the semiconductor substrate 1 is an optional feature since the control gate 2 may be arranged within another layer, e.g., a semiconductor layer or within another type of substrate.

Regarding the lateral arrangement it should be noted that the insulating layer 3 comprising the floating gate 4 may be placed on top of the control gate 2. Consequently, all elements 6, 3, 4 and 2 may be arranged according to preferred embodiments within the same lateral area, i.e., have a common lateral projection.

According to embodiments, the floating gate 4 is positioned inside the insulating layer 3, for example positioned between different insulating layers of the insulator 3. The insulator 3 is referred to below as an element comprising one or more insulating layers and also marked by the reference numeral 3. According to embodiments, the area of the floating gate 4 is larger, equal or smaller than the control gate. Preferably, it extends laterally over the area of the elements 2 and/or 6 since the floating gate 4 may be connected to a gate of a MOSFET or in general to a gate of a transistor which can be arranged next to the area of the elements 6 and/or 2. Note, the floating gate 4 has a potential defined by cₛₑₙₛ with respect to the sensing layer 6 and C_{CG} with respect to the control gate 2. The optional transistor which may also be arranged within the substrate/semiconductor substrate 1 is marked by the reference numeral 12.

Since now the structure of the sensor device 20 has been discussed, the functionality will be discussed. The sensor device 20 is configured to detect a physical or chemical modification of the capacitance of the sensing layer 6. The capacitance may be changed due to a fluid or gas or liquid 19 in the surrounding of the sensing layer 6. For example, the capacitance or a change of the capacitance results from charges within the fluid 19. This means, in other words, according to further embodiments, that the sensor device 20 is configured to detect charges (physisorbed specifics, chemisorbed specifics, dipoles and/or ions) which are present at the surface or in the bulk of the sensing layer 6 and which may result from the fluid and/or gas and/or liquid 90. According to further embodiments, a sensor device 20 might be configured to detect a physical or chemical modification of the capacitance of the sensing layer 6. Furthermore, a combination of charges and/or capacitances can be detected with the one device 20. Consequently, the sensor 20 is able to detect charges and change of capacitance in a fluid/gas or liquid 19.

It should be noted that according to embodiments the sensor device 20 may be used for any kind of fluid.

Charges due to directions at the sensitive layer 6 can be detected as follows: The charges or a capacitance on the sensitive layer 6 lead to a change of the potential of the floating gate 4. A change of the floating gate potential influences the source drain current of the MOSFET or transistor 12. The change of the source-drain current can be directly measured, e.g., by a (not shown) measurement circuit. With a detection circuitry the source drain current can be kept constant and the change of the floating gate potential is measured. For example, by varying a potential at the control gate 2 the floating gate potential can be kept constant. This increases the accuracy.

Since a capacitance or capacitance change or a charge leading to a capacitance or a charge change leading to a capacitance change it can be determined that the sensor layer 6 enables to enhance the amount of properties to be determined. According to embodiments, changes of film thickness or electrical film parameters lead to a change of the capacitance and can, thus, be detected as well.

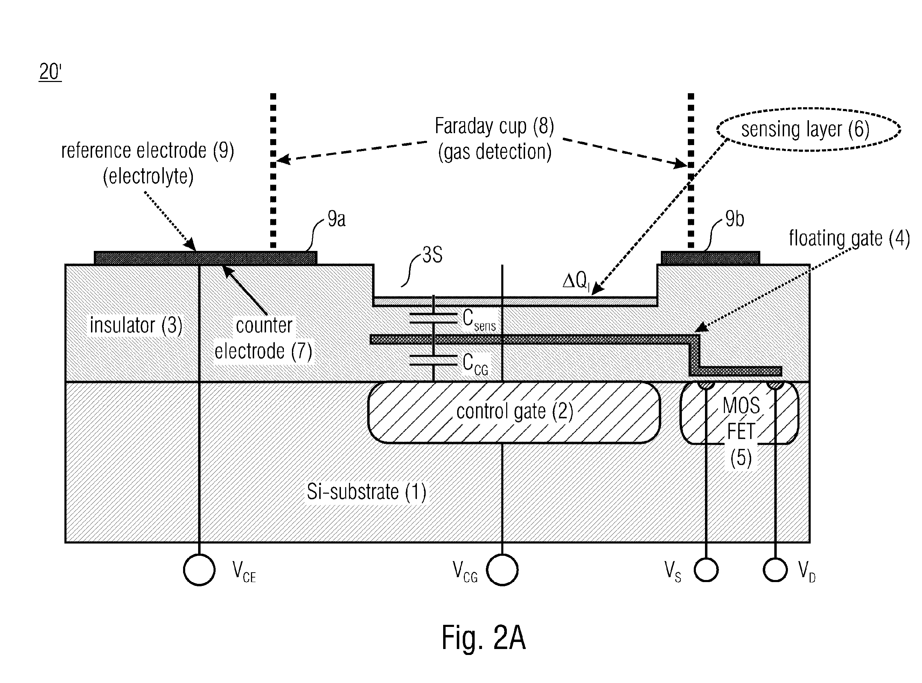

With respect to Fig. 2a, a sensor device 20' having optional elements will be discussed. The structure as illustrated by Fig. 2a is referred to as CCSFET: floating gate CHEM-FET with control gate and counter electrode.

The device 20' comprises the substrate 1 within which the control gate 2 is arranged. On the substrate, the insulator 3 together with the sensing layer 6 is arranged. As can be seen, the sensing layer 6 is arranged within a sink 3S of the insulator 3.

The substrate 1 comprises instead of the transistor 12 the MOSFET transistor 5, also arranged laterally adjacent to the region of the control gate 2. The floating gate 4 is connected to the MOSFET 5 or - in more detail - to the gate of the MOSFET 5.

According to embodiments, the sensor device 20' may comprise one or more reference electrodes (electrolyte) marked by the reference numerals 9a and 9b. Additionally, a Faraday cup 8 for gas detection may be present. The Faraday cup may be arranged on the reference electrodes/counter electrodes 9 and extends perpendicular from the surface of the sensor 20' around the sensing layer 6. For example, the counter electrode (reference electrode 9) can have different topologies, e.g., planar or cylinder or an arbitrary three-dimensional structure like the Faraday cup 8. According to embodiments, the counter electrode 7 can act as a reference electrode 9 for conducting liquids according to an embodiment. According to another embodiment, the counter electrode 7 can act as electrical shielding for insulating fluids. According to further embodiments, the counter electrode 7 can define an electrical potential for insulating fluids. In other words, Here, the counter electrode may act as a Faraday cup 7 (e.g. for gas detection) or reference electrode (e.g. for electrolyte measurement).

It should be noted that all electrodes 9a and 9b as well as the contacts of the transistor 5 and the contact of the control gate 2 may have a through wire, so that, from the back side of the substrate 1 or from a redirection layer within the substrate 1, the respective elements can be electrically connected. The respective voltage V_{CE}, V_{CG}, V_{S} and V_{D} is indicated. The potential V_{CE} of the counter electrode 7 can be varied to keep the floating gate potential constant. Note that, according to embodiments, the potential V_{CE} and/or the potential V_{CG} of the control gate can be varied together. For example, equal or different potentials can be applied to the control gate 2 and the counter electrode 7.

When a gas is to be detected, a Faraday cup 8 is positioned to enclose the sensing layer 6. The counter electrode 7 is electrically connected to the Faraday cup 8 for electrical shielding and for keeping a constant potential around the sensing layer 6. When charges in a liquid are to be detected, the counter electrode 7 acts as a reference electrode 9.

When the sensing layer 6 is exposed to the fluid, charges accumulate, thereon and therein. They induce a change of the potential of the floating gate 4. The change of the floating gate 4 potential changes the source-drain current of MOSFETs 5, 12, which is directly measured. This allows determining the concentration of charges in the fluid.

For the sake of completeness, the abbreviations for the voltages are as follows:
- V_{CE}:: Voltage Counter Electrode
- V_{GR}:: Voltage Guard Ring
- V_{CG}:: Voltage Control Gate
- V_{S}:: Source Voltage
- V_{D}:: Drain Voltage
- V_{CE}:: Voltage Counter Electrode

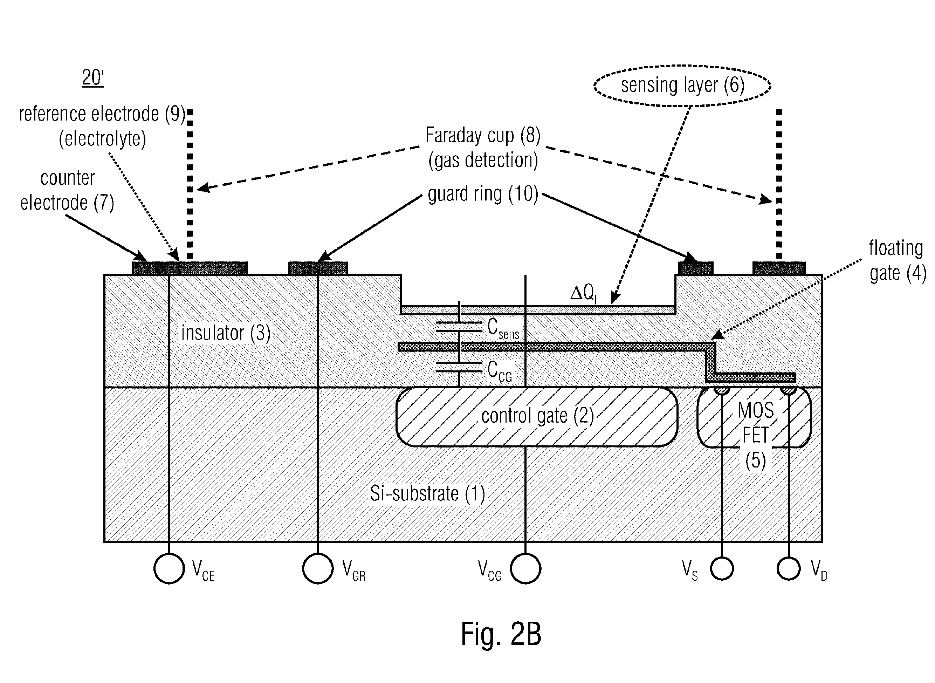

Fig. 2b shows another variant of a sensor device 20' where the reference electrode (electrolyte) 9 is combined with a counter electrode 7. Additionally to the counter electrode 7 and reference electrode 9 a so-called ring guard 10 may be arranged. The ring guard 10 is arranged between the counter electrode 7/reference electrode 9 and the sensing layer 6. It should be noted that the counter electrode 7, the reference electrode 9 and/or the guard ring 10 may, according to embodiments, be arranged circumferential to the sensing layer 6.

The structure as illustrated by Fig. 2b can be referred to as CCSFET: floating gate CHEM-FET with control gate and counter electrode. Again, the counter electrode 7 may act as a Faraday cup (gas detection) or reference electrode (electrolyte measurement).

The additional guard rings 10 can according to embodiments be placed between the sensing layer 10 and the counter electrodes and have the purpose to perform a kind of shielding. In detail, the guard ring 10 enables to avoid potential perturbations that can lead to a parasitic signal.

Note, the one or more counter electrodes and/or reference electrodes and/or guard rings may be made of a conductor material and are arranged on the insulator 3 but (optionally but preferably) separated from the sensitive layer 6.

Note, according to embodiments, the elements 11, 10, 8, 7 and/or 9 can extend as a ring or different shape around the sensing layer 6.

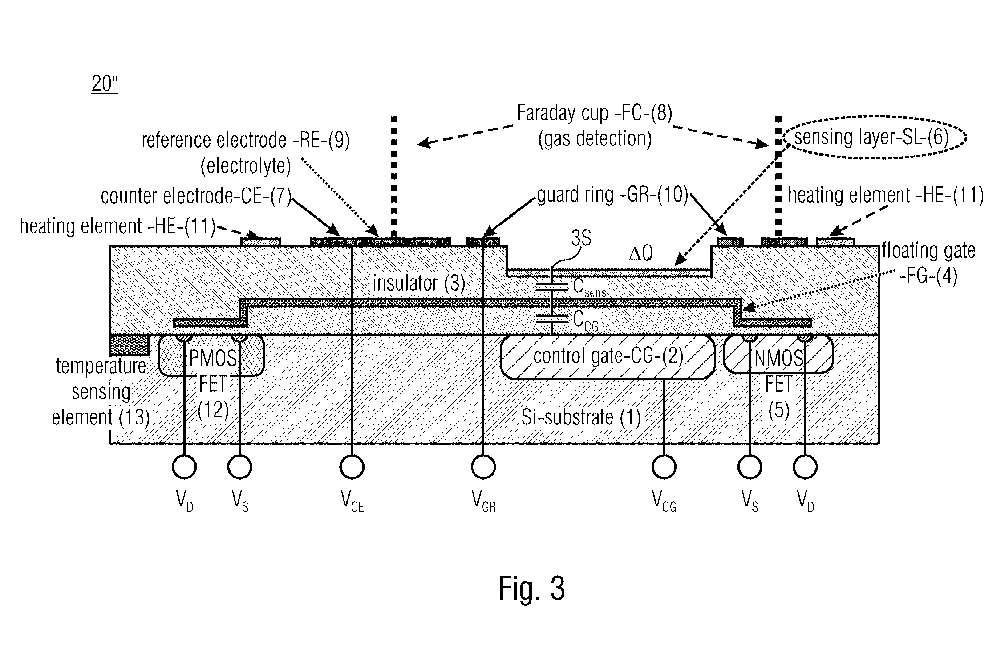

Fig. 3 shows a sensor device 20" which comprises the substrate 1, the insulator 3 and the sensing layer 6 as basic elements. The structure as illustrated by Fig. 3 can be referred to as CCSFET: floating gate CHEM-FET with control gate and counter electrode.

The insulator 3 covers the area of the substrate 1, wherein the sensitive layer 6 covers the area above the floating gate 2. The sensitive layer 6 is arranged on the top of the insulator 3 in the sink 3S. Additionally, the electrodes 7, 9 and the guard ring 10 is arranged. Within the substrate 1 the two transistors 5 and 12 are formed. The transistor 5 may be an n MOSFET transistor, while the transistor 12 may be a p MOSFET transistor. The floating gate 4 is electrically connected to both gates of both transistors 5 and 12, i.e., extends to both sides out of the area defined by the lateral projection of the sensing layer 6 and the control gate 2. The floating gate may according to embodiments be connected to the transistor 5, e.g., MOSFET, or the transistor 12, e.g., MOSFET as well, or both transistors 5 and 12. The transistors can be MOSFETs e.g., having a p channel like the transistor 12 or an n channel like the transistor 5. Both transistors 5 and 12 can be CMOS transistors and may have an input of an amplifying device.

Regarding the sensing layer 6 and/or the control gate 2 it should be noted that both layers are laterally limited with regard to its dimension. As discussed above, the sensing layer 6 is laterally limited by the sink or the walls of the sink 3S.

According to further embodiments, the device 20" may comprise a temperature sensing element 13. The temperature sensing element 13 can be integrated into the substrate 1 and can be formed as a kind of a diode, for example. Additionally, the device 20" comprises a heating element 11 which may comprise a topology. For example, the heating element can be implemented to heat the sensing layer 6 to a desired temperature. Here, the heating element 11 is arranged on the top of the insulator 3, e.g., extending around the sensing layer. Both the heating element 11 and the temperature sensing element 13 have the purpose to keep the sensing layer 6 at a desired temperature or to control the desired temperature. It should be noted that the heating element 11 can be used without the temperature sensing element 13 and vice versa.

As illustrated by the embodiments of Fig. 2a, 2b and 2c, the floating gate 4 can be larger, equal or smaller than the control gate 2. Regarding the counter electrode 7: same acts as Faraday cup (gas detection) or reference electrode (electrolyte measurements).

Starting from the structure of the three embodiments of 2a, 2b and 2c having different transistor configurations and different floating gate sized, the functionality will be discussed.

Also in the above embodiments the transistors 12 and 5 have been discussed as n type or p type transistors. It should be noted that both transistors 5 and 12 may be of the same type or may of a different type, i.e., the MOSFETs 5 and 12 can be n type or p type or a combination of both (CMOS). In a variation, the floating gate 4 is connected to the gate of the n channel 5 and to the gate of the p channel MOSFET 12. This allows detecting any potential charge of the floating.

Possible applications of the devices 20, 20' and 20" are gas measurements, electrolyte measurements, biological measurements, detection of deposition or remove surface films, cleaning in place (CIP) measurements (charge and capacitance) and/or phase change measurements.

As discussed above, further embodiments refer to a method for manufacturing the device. Here, the method defines the manufacturing of the single layers, namely providing the substrate 1 comprising the control gate 2 and optionally the transistors 5 and 12; providing the insulator 3 including the floating gate 4 and providing the sensing layer 6. Optionally, a step of providing the sink 3S in the insulator 3 may be applied before providing the sensing layer 6 on the surface of the insulator 3. Additionally, optional method steps for providing the electrodes 7, 9, 10 and 8 may be applied.

Another embodiment refers to a method for performing the measurement. The method comprises the central step of determining a change of voltage at the floating gate 4 so as to determine a charge or capacitance. The change of the voltage may be detected by use of detecting the source drain current of the respective transistors 5, 12 or 5 and 12.

Although some aspects have been described in the context of an apparatus (sensor device) , it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Sensor device (20, 20', 20") for determining a property of a fluid, gas or liquid, comprising:
a control gate (2);
a sensing layer (6);
at least one insulating layer between the sensing layer (6) and the control gate (2), wherein the at least one insulating layer comprises a floating gate (4).

2. Sensor device (20, 20', 20") according to claim 1, wherein the at least one insulating layer comprises a combination of different insulating layers; and/or
wherein the floating gate (4) is positioned inside the at least one insulating layer or inside a combination of different insulating layers comprised by the at least one insulating layer.

3. Sensor device (20, 20', 20") according to one of the previous claims, wherein the sensor device (20, 20', 20") further comprises one or more transistors (5, 12), especially MOSFET transistors; and/or
wherein the sensor device (20, 20', 20") further comprises a first transistor (5, 12) and/or a second transistor (5, 12), especially MOSFET transistors, wherein the floating gate (4) is connected to a gate of the first or the second transistor (5, 12), or
wherein the sensor device (20, 20', 20") further comprises a first transistor (5, 12) and a second transistor (5, 12), especially MOSFET transistors, wherein the floating gate (4) is connected to the gate of the first transistor (5, 12) and the second transistor (5, 12).

4. Sensor device (20, 20', 20") according to one of the previous claims, wherein the floating gate (4) is configured to keep a constant potential by varying a potential at the control gate (2) or a counter electrodes (7, 9, 8).

5. Sensor device (20, 20', 20") according to one of the previous claims, further comprising one or more counter electrodes (7, 9, 8) arranged on the at least one insulating layer; or
further comprising one or more counter electrodes (7, 9, 8) which comprise a conducting material and an insulating material separating the one or more counter electrodes (7, 9, 8) from the sensitive layer; or
further comprising a plurality of counter electrodes (7, 9, 8) arranged on the at least one insulating layer and having different topologies.

6. Sensor device (20, 20', 20") according to claim 5, wherein the one or more counter electrodes (7, 9, 8) are configured to act as reference electrodes (7, 9, 8) for conducting liquids and/or to act as electrical shielding for insulating fluids and/or to define an electrical potential for insulating fluid.

7. Sensor device (20, 20', 20") according to one of the previous claims, wherein the at least one insulating layer comprises a sink in which the sensing layer (6) is arranged.

8. Sensor device (20, 20', 20") according to one of the previous claims, wherein the sensing layer (6) comprises a metal and/or semiconductor material and/or insulating material and/or biological (reactive) material and/or chemical (reactive) material; and/or
wherein the sensing layer (6) is configured to detect charges being present at the surface or in a bulk of the sensing layer (6), or configured to detect physical or chemical modifications on a capacitance of the sensing layer (6) or configured to detect a combination of charges and capacitance.

9. Sensor device (20, 20', 20") according to one of the previous claims, wherein the sensor device (20, 20', 20") comprises a substrate, especially a semiconductor substrate; or
wherein the sensor device (20, 20', 20") comprises a substrate, especially a semiconductor substrate (1) and wherein the control gate (2) and/or one or more transistors (5, 12) are arranged within the substrate.

10. Sensor device (20, 20', 20") according to one of the previous claims, wherein the control gate (2) and the sensing layer (6) are arranged so as to form a common lateral projection or common lateral overlap; and/or
wherein one or more transistors (5, 12) and/or one or more counter electrodes (7, 9, 8) are arranged laterally adjacent to the control gate (2) and/or sensing layer (6);
and/or
wherein the floating gate (4) laterally covers the control gate (2) and/or sensing layer (6) or wherein the floating gate (4) laterally extends over a projection of the control gate (2) and/or sensing layer (6).

11. Sensor device (20, 20', 20") according to one of the previous claims, wherein the control gate (2) comprises a conducting material, especially a doped semiconductor or metal; and/or
wherein the floating gate (4) comprises a conducting material.

12. Sensor device (20, 20', 20") according to one of the previous claims, wherein the sensor device (20, 20', 20") layer comprises a ring guard (10), especially a ring guard (10) arranged on the at least one insulating layer; or
wherein the sensor device (20, 20', 20") layer comprises a ring guard (10), especially a ring guard (10) arranged on the at least one insulating layer, said ring guard (10) being arranged around the sensing layer (6).

13. Sensor device (20, 20', 20") according to one of the previous claims, further comprising a temperature sensing element, especially a temperature sensing element being implemented as a diode; and/or
further comprising a heating element, especially a heating element being integrated around the sensing layer (6).

14. Method for manufacturing a sensor device (20, 20', 20") according to one of the previous claims comprising the steps:
providing a substrate (1) comprising a control gate (2); and
providing at least one insulating layer on the substrate, so that the at least one insulating layer comprises a floating gate (4); and
providing a sensing layer (6) on the at least one insulating layer.

15. Method for determining a charge and/or capacitance using a sensor device (20, 20', 20") according to one of the claims 1 to 13 comprising the steps of determining a change of voltage at the floating gate (4).
